# EUROPÄISCHE PATENTSCHRIFT

(11) **EP 0 936 113 B1**
(45) Veröffentlichungstag und Bekanntmachung des Hinweises auf die Patenterteilung: **30.10.2002**
(21) Anmeldenummer: 99101985.2
(22) Anmeldetag: 01.02.1999
(51) Int. Cl.: B60T 7/12

(54) **Bremsregelungsanlage in Kraftfahrzeugen**
Brake control device for vehicles
Installation de réglage de frein pour véhicules

(30) Priorität: 14.02.1998 DE 19806119
(43) Veröffentlichungstag der Anmeldung: 18.08.1999
(73) Patentinhaber: Bayerische Motoren Werke Aktiengesellschaft, 80788 München (DE)
(72) Erfinder: Bachmaier, Peter, 85777 Grossnöbach (DE)

(56) Entgegenhaltungen:
- EP-A1- 0 314 117
- DE-A1- 2 513 517
- DE-A1- 3 325 713
- DE-A1- 3 325 714
- DE-A1- 4 011 403
- DE-A1- 4 036 174
- DE-A1- 4 101 759
- DE-A1- 4 218 484
- DE-A1- 4 302 541
- DE-A1- 4 310 354
- DE-A1- 4 420 089
- US-A- 3 841 427
- US-A- 4 079 802
- US-A- 4 934 477
- US-A- 5 170 858

## Beschreibung

Die Erfindung bezieht sich auf eine Bremsregelungsanlage in Kraftfahrzeugen nach dem Oberbegriff des Patentanspruchs 1.

Eine derartige Bremsregelungsanlage ist beispielsweise aus der US 5,170,858 bekannt, ferner wird bspw. auf die DE 44 27 246 C2 verwiesen. Diese bekannten Bremsregelungsanlagen sind mit steuerbaren Komponenten, insbesondere Ventilen und Pumpen, ausgestattet, die in den Leitungen zur Förderung des Brems-Druckmittels angebracht sind. Im Falle eines automatischen Bremseingriffs, beispielsweise durch eine Geschwindigkeits- oder Abstandsregeleinheit, sind unabhängig von der Betätigung des Bremspedals beliebige vorgegebene Druckwerte in den Radbremszylindern einstellbar. Ebenso ist eine Bremsregelungsanlage mit der Möglichkeit eines automatischen Bremseingriffs für den Fall einer sog. Panikbremsung aus der DE 195 24 939 A1 bekannt.

Problematisch bei derartigen Bremsregelungsanlagen ist, daß der Fahrer des nachfolgenden Fahrzeugs möglicherweise vom Bremsverhalten des vorausfahrenden Fahrzeugs überrascht ist und/oder gerade bei einer Panikbremsung (auch als Bremsassistent bekannt) nicht in der Lage ist, ebenso gut zu verzögern. Daher ist die Gefahr einer Kollision des nachfolgenden Fahrzeugs hoch.

Es ist daher Aufgabe der Erfindung, diesen Nachteil zu beseitigen. Diese Aufgabe wird durch die Merkmale des Patentanspruchs 1 gelöst.

Erfindungswesentlich ist, daß mittels Abstandssensoren im Front- und im Heckbereich des Fahrzeugs der Abstand zum vorausfahrenden und zum nachfolgenden Fahrzeug ermittelt wird und daß bei Erkennung der Gefahr einer Kollision mit dem vorausfahrenden und/oder mit dem nachfolgenden Fahrzeug mittels des automatischen Bremseingriffs die Bremsintensität derart geregelt wird, daß der Abstand zum vorausfahrenden Fahrzeug so klein wie möglich ist.

Hierdurch wird dem nachfolgenden Fahrzeug ein der Situation entsprechender maximaler Bremsweg zur Verfügung gestellt und die Kollisionsgefahr auf ein Minimum reduziert.

In einer Weiterbildung der Erfindung kann jedoch die Funktion der Bremsintensitätsregelung zum Erreichen des kleinstmöglichen Abstandes zum vorausfahrenden Fahrzeug auch unterdrückt werden, wenn der Abstand zum nachfolgenden Fahrzeug so groß ist, daß eine Kollisionsgefahr mit dem nachfolgenden Fahrzeug auch bei maximal möglicher Bremsintensität ausgeschlossen werden kann.

Hierdurch werden unnötige Irritationen des Fahrers durch zu nahes Auffahren auf das vorausfahrende Fahrzeug vermieden.

## Patentansprüche

1. Bremsregelungsanlage in Kraftfahrzeugen mit der Möglichkeit eines automatischen Bremseingriffs in Abhängigkeit unter anderem vom mittels Abstandssensoren ermittelten Abstands zu einem vorausfahrenden Fahrzeug, **dadurch gekennzeichnet, daß** mittels Abstandssensoren im Heckbereich des Fahrzeugs auch der Abstand zu einem nachfolgenden Fahrzeug ermittelt wird und daß bei Erkennung einer Kollisionsgefahr mittels des automatischen Bremseingriffs die Bremsintensität derart geregelt wird, daß der Abstand zum vorausfahrenden Fahrzeug so klein wie möglich ist.

## Claims

1. A brake control system in motor vehicles with an automatic brake engagement facility in dependence inter alia on the distance from a vehicle in front, measured by distance sensors, **characterised in that** distance sensors in the rear of the vehicle also measure the distance from a following vehicle and if a risk of collision is recognised, the automatic brake engagement means adjusts the braking intensity so as to reduce the distance from the vehicle in front to a minimum.

## Revendications

1. Installation de régulation de frein de véhicule automobile avec possibilité d'intervention automatique sur le frein en fonction entre autre de la distance du véhicule qui précède déterminée par des capteurs de distance,
**caractérisée en ce qu'**
à l'aide de capteurs de distance installés dans la partie arrière du véhicule on détermine également la distance par rapport au véhicule qui suit et en cas de détection de risque de collision, par une intervention automatique sur le frein, on régule l'intensité de freinage pour réduire au minimum la distance par rapport au véhicule qui précède.
